# EUROPÄISCHE PATENTANMELDUNG

(11) **EP 4 729 230 A1**
(43) Veröffentlichungstag der Anmeldung: **22.04.2026**
(21) Anmeldenummer: 25203384.0
(22) Anmeldetag: 19.09.2025
(51) Int. Cl.: B23K 37/04, B23K 26/38

(54) **PRODUKTPALETTE ZUR ABLAGE DER BEARBEITUNGSPRODUKTE EINER TRENNENDEN BEARBEI-TUNG EINES PLATTENARTIGEN WERKSTÜCKS UND MASCHINELLE VORRICHTUNG MIT EINER DERARTIGEN PRODUKTPALETTE**

(30) Priorität: 21.10.2024 DE 102024130459
(71) Anmelder: TRUMPF Werkzeugmaschinen SE + Co. KG, 71254 Ditzingen (DE)
(72) Erfinder: Kumpe, Clemens, 01904 Neukirch (DE)
(74) Vertreter: Trumpf Patentabteilung

(57) **Zusammenfassung**

Produktpalette zur Ablage der Bearbeitungsprodukte einer trennenden Bearbeitung eines plattenartigen Werkstücks und maschinelle Vorrichtung mit einer derartigen Produktpalette

Eine Produktpalette (1) zur Ablage eines als Bearbeitungsprodukt einer trennenden Bearbeitung eines plattenartigen Werkstücks vorliegenden Werkstückteils und eines als weiteres Bearbeitungsprodukt der trennenden Werkstückbearbeitung vorliegenden Restgitters weist Auflageelemente (5) auf, die bearbeitungsproduktseitig zur gemeinschaftlichen Lagerung des Werkstückteils und des Restgitters in Schwerkraftrichtung ausgebildet sind. In einem ersten Funktionszustand der Produktpalette (1) sind das Werkstückteil und das Restgitter mittels der Auflageelemente (5) der Produktpalette (1) gemeinschaftlich in Schwerkraftrichtung lagerbar. In einem zweiten Funktionszustand bildet die Produktpalette (1) an ihrer Oberseite eine ebene Auflagefläche (7) zur alleinigen Lagerung des Werkstückteils in Schwerkraftrichtung aus.

Eine maschinelle Vorrichtung zum Handhaben eines als Bearbeitungsprodukt einer trennenden Bearbeitung eines plattenartigen Werkstücks vorliegenden Werkstückteils und eines als weiteres Bearbeitungsprodukt der trennenden Werkstückbearbeitung vorliegenden Restgitters umfasst eine Produktpalette (1) der vorstehenden Art.

## Beschreibung

Die Erfindung betrifft eine Produktpalette zur Ablage eines als Bearbeitungsprodukt einer trennenden Bearbeitung eines plattenartigen Werkstücks, insbesondere eines Blechs, vorliegenden Werkstückteils und eines als weiteres Bearbeitungsprodukt der trennenden Werkstückbearbeitung vorliegenden Restgitters, insbesondere zur Ablage eines lösbaren Produktverbunds des Werkstückteils und des Restgitters,
- wobei die Produktpalette Auflageelemente aufweist, die bearbeitungsproduktseitig zur gemeinschaftlichen Lagerung des Werkstückteils und des Restgitters in Schwerkraftrichtung ausgebildet sind und
- wobei die Produktpalette in einen ersten Funktionszustand und in einen zweiten Funktionszustand überführbar ist und in dem ersten Funktionszustand der Produktpalette das Werkstückteil und das Restgitter mittels der Auflageelemente der Produktpalette gemeinschaftlich in Schwerkraftrichtung lagerbar sind.

Die Erfindung betrifft außerdem eine maschinelle Vorrichtung zum Handhaben eines als Bearbeitungsprodukt einer trennenden Bearbeitung eines plattenartigen Werkstücks, insbesondere eines Blechs, vorliegenden Werkstückteils und eines als weiteres Bearbeitungsprodukt der trennenden Werkstückbearbeitung vorliegenden Restgitters, insbesondere zum Handhaben eines lösbaren Produktverbunds des Werkstückteils und des Restgitters, wobei die maschinelle Vorrichtung eine Produktpalette der vorstehenden Art zur Ablage des Werkstückteils und des Restgitters aufweist.

Gattungsgemäßer Stand der Technik ist offenbart in EP 4 257 285 A1.

Im Falle des Standes der Technik wird an einer Laserschneidmaschine ein auf einer Palette gelagertes Blech trennend bearbeitet. Dabei werden als Bearbeitungsprodukte mehrere Blechteile und ein die Blechteile umgebendes Restgitter erzeugt. Ebenso wie zuvor das Blech während der trennenden Bearbeitung sind unmittelbar nach der trennenden Blechbearbeitung die Bearbeitungsprodukte auf Auflageleisten der Palette gelagert. Die Auflageleisten sind an einem Rahmen der Palette fest montiert.

Die Palette mit den Bearbeitungsprodukten wird aus dem Arbeitsraum der Laserschneidmaschine zu einer Entladestation bewegt. An der Entladestation werden die Blechteile und das Restgitter mittels einer Hubvorrichtung gemeinsam von den Auflageleisten abgehoben. Zu diesem Zweck sind auf einer unterhalb der Palette angeordneten Grundplatte der Hubvorrichtung nach oben vorstehende Hubelemente vorgesehen, die sich aufgrund einer Hubbewegung der Grundplatte durch die zwischen den Auflageleisten der Palette vorgesehenen Zwischenräume hindurch nach oben bewegen. Die Hubelemente kommen dabei mit ihren voreilenden Enden an der Unterseite der auf den Auflageleisten gelagerten Bearbeitungsprodukte zur Anlage und heben bei fortgesetzter Hubbewegung die Bearbeitungsprodukte von den Auflageleisten ab. Anschließend wird zunächst das von den Auflageleisten der Palette abgehobene Restgitter mittels eines Greifers erfasst und auf einer Restgitterpalette abgelegt, ehe die gleichfalls von den Auflageleisten der Palette abgehobenen Blechteile mittels eines hierfür vorgesehenen Saugerrahmens übernommen und zu einer Blechteilpalette transferiert werden.

Die Aufgabe der vorliegenden Erfindung besteht darin, eine maschinelle Vorrichtung zum Handhaben von in Form eines Werkstückteils und eines Restgitters vorliegenden Bearbeitungsprodukten einer trennenden Bearbeitung eines plattenartigen Werkstücks bereitzustellen, an welcher ein und dieselbe Produktpalette sowohl zur gemeinschaftlichen Ablage der Bearbeitungsprodukte als auch zur schonenden und geordneten Ablage des von dem Restgitter separierten Werkstückteils genutzt werden kann.

Erfindungsgemäß gelöst wird diese Aufgabe durch die Produktpalette gemäß Patentanspruch 1 und durch die mit einer derartigen Produktpalette versehene maschinelle Vorrichtung gemäß Patentanspruch 7.

Die erfindungsgemäße Produktpalette kann in zwei Funktionszustände überführt werden.

In einem ersten Funktionszustand ist die Produktpalette ebenso wie die Palette des Standes der Technik zur gemeinschaftlichen Lagerung der Bearbeitungsprodukte einer trennenden Werkstück-, insbesondere einer trennenden Blechbearbeitung ausgebildet. Das Werkstück und das Restgitter der trennenden Werkstückbearbeitung sind gemeinschaftlich auf Auflageelementen, vorzugsweise auf herkömmlichen Auflageleisten, der Produktpalette lagerbar. In diesem Funktionszustand befindet sich die erfindungsgemäße Produktpalette beispielsweise unmittelbar im Anschluss an die trennende Werkstückbearbeitung.

Nach dem Separieren des Werkstückteils von dem Restgitter ist die erfindungsgemäße Produktpalette in einen zweiten Funktionszustand überführt. In dem zweiten Funktionszustand der Produktpalette ist an deren Oberseite eine ebene Auflagefläche ausgebildet, die in besonderem Maße eine schonende und geordnete Ablage des von dem Restgitter separierten Werkstückteils ermöglicht.

Besondere Ausführungsarten der Erfindung nach den unabhängigen Patentansprüchen ergeben sich aus den abhängigen Patentansprüchen 2 bis 6 und 8 bis bis 16.

Patentanspruch 2 betrifft eine bevorzugte Möglichkeit zur Realisierung des ersten Funktionszustands und des zweiten Funktionszustands der erfindungsgemäßen Produktpalette. Die erfindungsgemäße Produktpalette weist in diesem Fall eine mit den Auflageelementen versehene Elementeinheit und eine mit der Auflagefläche versehene Flächeneinheit auf. Die beiden Einheiten der Produktpalette sind in vertikaler Richtung relativ zueinander wahlweise in eine erste Relativposition oder in eine zweite Relativposition zustellbar. In dem ersten Funktionszustand der Produktpalette und bei der dem ersten Funktionszustand der Produktpalette zugeordneten ersten Relativposition der Elementeinheit und der Flächeneinheit stehen die Auflageelemente bearbeitungsproduktseitig gegenüber der Auflagefläche nach oben vor. In dem zweiten Funktionszustand der Produktpalette und bei der dem zweiten Funktionszustand der Produktpalette zugeordneten zweiten Relativposition der Elementeinheit und der Flächeneinheit sind die Auflageelemente bearbeitungsproduktseitig mit der Auflagefläche bündig oder gegenüber der Auflagefläche nach unten versetzt angeordnet.

Im Falle der erfindungsgemäßen Produktpalette gemäß Patentanspruch 3 weist die Elementeinheit der Produktpalette eine Basis auf, an welcher die Auflageelemente vorgesehen sind und nach oben vorstehen. Die Basis der Elementeinheit ist unterhalb der Auflagefläche der Flächeneinheit angeordnet. Die Flächeneinheit ist an der Auflagefläche mit Durchtrittsöffnungen versehen, durch die sich die Auflageelemente der Elementeinheit bei einer Änderung der Relativposition der Elementeinheit und der Flächeneinheit und der damit verbundenen Änderung des Funktionszustands der Produktpalette hindurchbewegen.

Ausweislich Patentanspruch 4 bilden in bevorzugter Ausgestaltung der erfindungsgemäßen Produktpalette die Elementeinheit und die Flächeneinheit der Produktpalette jeweils zwei einander gegenüberliegende Rahmenschenkel eines rechteckigen Palettenrahmens der Produktpalette aus. Der Palettenrahmen der erfindungsgemäßen Produktpalette setzt sich demnach aus zwei Rahmenschenkelpaaren zusammen, die als Teile der Elementeinheit und der Flächeneinheit in vertikaler Richtung relativ zueinander zustellbar sind.

Wenigstens eines der Rahmenschenkelpaare des Palettenrahmens ist in weiterer Ausgestaltung der erfindungsgemäßen Produktpalette mit einer Führungsvorrichtung versehen, mittels derer die Produktpalette bei Bewegungen in Längsrichtung der Rahmenschenkel des mit der Führungsvorrichtung versehenen Rahmenschenkelpaars geführt ist (Patentanspruch 5). Als Führungsvorrichtung kommt beispielsweise eine Führungsvorrichtung mit Führungsrollen in Frage, die bei Bewegungen der Produktpalette mit zugeordneten Führungsschienen zusammenwirken.

Im Falle der Erfindungsbauart gemäß Patentanspruch 6 weist jedes der beiden Rahmenschenkelpaare der erfindungsgemäßen Produktpalette eine Führungsvorrichtung der vorstehenden Art auf. Die beiden Führungsvorrichtungen ermöglichen geführte Bewegungen der Produktpalette in den senkrecht zueinander verlaufenden Längsrichtungen der beiden Rahmenschenkelpaare des rechteckigen Palettenrahmens. Dabei kann die Führungsvorrichtung an dem einen Rahmenschenkelpaar bei der ersten Relativposition der Elementeinheit und der Flächeneinheit und somit bei dem ersten Funktionszustand der Produktpalette genutzt werden. Die Führungsvorrichtung an dem anderen Rahmenschenkelpaar kann bei der zweiten Relativposition der Elementeinheit und der Flächeneinheit und somit bei dem zweiten Funktionszustand der Produktpalette verfügbar sein.

Aufgrund ihrer gemeinschaftlichen Lagerung auf den gegenüber der ebenen Auflagefläche nach oben vorstehenden Auflageelementen der in dem ersten Funktionszustand befindlichen Produktpalette sind die Bearbeitungsprodukte zum Entladen der Produktpalette gut zugänglich. Diesen Umstand nutzt die Entladeeinheit der erfindungsgemäßen maschinellen Vorrichtung gemäß Patentanspruch 8.

Die erfindungsgemäße maschinelle Vorrichtung gemäß Patentanspruch 9 weist zusätzlich zu einer Entladeeinheit eine Separiereinheit und eine Beladeeinheit auf. Mittels der Separiereinheit wird nach dem Entladen des Werkstückteils und des Restgitters von der in dem ersten Funktionszustand befindlichen Produktpalette das Werkstückteil von dem Restgitter separiert. Das von dem Restgitter separierte Werkstückteil wird dann mittels der Beladeeinheit auf der Produktpalette abgelegt, die zuvor aus dem ersten Funktionszustand in den zweiten Funktionszustand überführt worden ist und die folglich die zur schonenden und geordneten Ablage des Werkstückteils geeignete ebene Auflagefläche bereitstellt.

Im Falle der Bauarten der erfindungsgemäßen maschinellen Vorrichtung gemäß den Patentansprüchen 10 und 11 wird die Separiereinheit zusätzlich zu dem Separieren des Werkstückteils von dem Restgitter auch genutzt zum Entladen der Bearbeitungsprodukte von der in dem ersten Funktionszustand befindlichen Produktpalette (Patentanspruch 10) und/oder zum Beladen der in dem zweiten Funktionszustand befindlichen Produktpalette mit dem von dem Restgitter separierten Werkstückteil (Patentanspruch 11).

Patentanspruch 12 betrifft eine weitere bevorzugte Bauart der erfindungsgemäßen maschinellen Vorrichtung. Dabei bildet die Separiereinheit eine kompakte Baueinheit, die sowohl zum Entladen der in dem ersten Funktionszustand befindlichen Produktpalette von dem Werkstück und dem Restgitter als auch zum Separieren des Werkstückteils von dem Restgitter und zum Ablegen des von dem Restgitter separierten Werkstückteils auf der in den zweiten Funktionszustand überführten Produktpalette eingesetzt werden kann.

In weiterer bevorzugter Ausgestaltung der erfindungsgemäßen maschinellen Vorrichtung ist ausweislich Patentanspruch 13 zur Zustellung der Elementeinheit und der Flächeneinheit der erfindungsgemäßen Produktpalette in die erste Relativposition und in die zweite Relativposition und somit zum Überführen der erfindungsgemäßen Produktpalette in den ersten Funktionszustand und in den zweiten Funktionszustand eine Hubvorrichtung vorgesehen, mittels derer die Elementeinheit und die Flächeneinheit der Produktpalette in vertikaler Richtung relativ zueinander zustellbar sind.

Die Patentansprüche 14 bis 16 betreffen Bauarten der erfindungsgemäßen maschinellen Vorrichtung, im Falle derer die Zustellung der Elementeinheit und der Flächeneinheit der erfindungsgemäßen Produktpalette in die erste Relativposition und in die zweite Relativposition und somit das Überführen der erfindungsgemäßen Produktpalette in den ersten Funktionszustand und in den zweiten Funktionszustand unter Verwendung der vorgenannten Hubvorrichtung mit konstruktiv einfachen Mitteln möglich ist.

Nachfolgend wir die Erfindung anhand beispielhafter schematischer Darstellungen näher erläutert. Es zeigen:
- Figur 1: eine Produktpalette zum Einsatz bei der Handhabung von Bearbeitungsprodukten einer trennenden Blechbearbeitung in einem ersten Funktionszustand,
- Figur 2: die Produktpalette gemäß Figur 1 in einem zweiten Funktionszustand,
- Figur 3: eine Schnittdarstellung der Produktpalette gemäß Figur 2 in einer in Figur 2 angedeuteten Schnittebene III,
- Figur 4: eine Separierstation einer maschinellen Vorrichtung zum Handhaben von Bearbeitungsprodukten einer trennenden Blechbearbeitung mit der mit den Bearbeitungsprodukten beladenen Produktpalette gemäß den Figuren 1 bis 3,
- Figur 5: die Separierstation gemäß Figur 4 in der senkrechten Ansicht in Richtung des Pfeils V in Figur 4 und
- Figuren 6 bis 10: die Abläufe an der Separierstation gemäß den Figuren 4 und 5 ausgehend von den Verhältnissen gemäß den Figuren 4 und 5.

Eine in den Zeichnungen dargestellte Produktpalette 1 umfasst eine Elementeinheit 2 und eine Flächeneinheit 3.

Die Elementeinheit 2 der Produktpalette 1 weist als Basis eine Grundplatte 4 auf, an der als Auflageleisten 5 ausgebildete Auflageelemente der Elementeinheit 2 nach oben vorstehen. Mit der Grundplatte 4 ist die Elementeinheit 2 unterhalb einer Auflageplatte 6 der Flächeneinheit 3 der Produktpalette 1 angeordnet. Die Auflageplatte 6 weist an ihrer Oberseite eine Auflagefläche 7 auf und ist an der Auflagefläche 7 mit Durchtrittsöffnungen 8 für die Auflageleisten 5 der Elementeinheit 2 versehen.

Ein rechteckiger Palettenrahmen 9 der Produktpalette 1 umfasst zwei Rahmenschenkelpaare 10, 11, von denen das Rahmenschenkelpaar 10 Teil der Elementeinheit 2 und das Rahmenschenkelpaar 11 Teil der Flächeneinheit 3 ist.

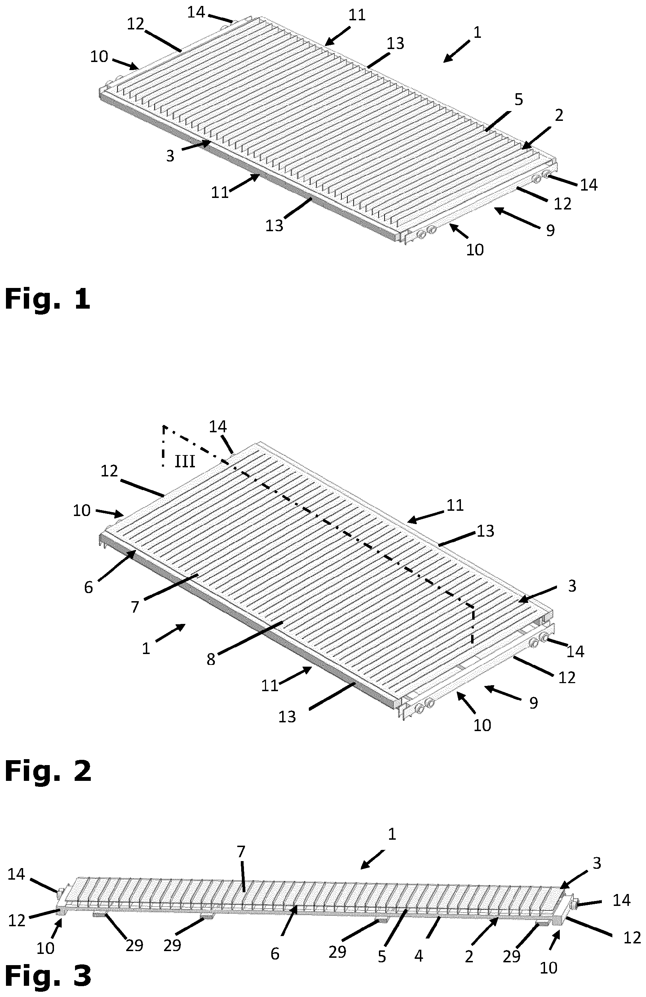

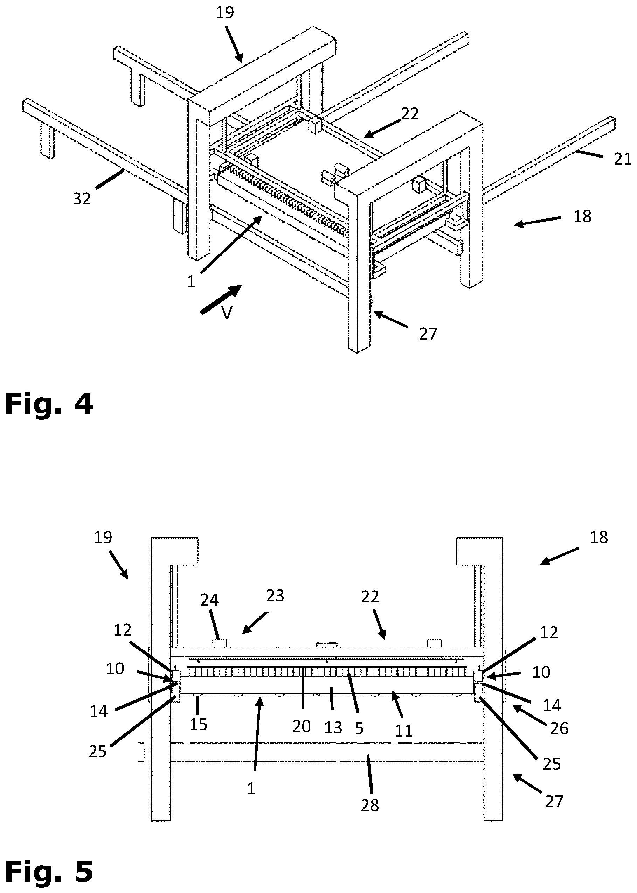

Jeder der Rahmenschenkel 12 des Rahmenschenkelpaars 10 der Elementeinheit 2 ist mit einer Führungsvorrichtung in Form von Führungsrollen 14 versehen. Die Führungsrollen 14 führen die Produktpalette 1 bei Bewegungen in Längsrichtung der Rahmenschenkel 12 der Elementeinheit 2. Entsprechend sind an den Rahmenschenkeln 13 des Rahmenschenkelpaars 11 der Flächeneinheit 3 als Führungsvorrichtung in den Figuren 1 und 2 verdeckte Führungsrollen 15 vorgesehen (Figuren 5 bis 9). Mittels der Führungsrollen 15 wird die Produktpalette 1 bei Bewegungen in Längsrichtung der Rahmenschenkel 13 der Flächeneinheit 3 geführt.

Die Elementeinheit 2 und die Flächeneinheit 3 der Produktpalette 1 sind in vertikaler Richtung relativ zueinander zustellbar. Dadurch kann die Produktpalette 1 in einen ersten Funktionszustand und in einen zweiten Funktionszustand überführt werden.

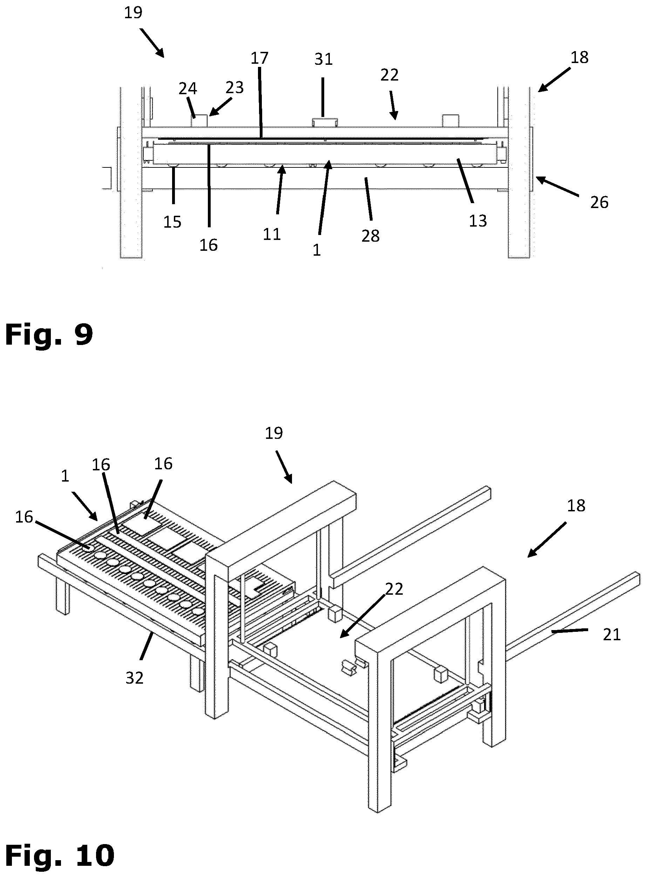

In dem in Figur 1 gezeigten und bei einer ersten Relativposition der Elementeinheit 2 und der Flächeneinheit 3 vorliegenden ersten Funktionszustand dient die Produktpalette 1 dazu, bei einer trennenden Blechbearbeitung erzeugte Werkstückteile in Form von Blechteilen 16 und ein bei der trennenden Blechbearbeitung als weiteres Bearbeitungsprodukt erzeugtes Restgitter 17 (Figuren 9, 10) mittels der gegenüber der Auflagefläche 7 der Produktpalette 1 nach oben vorstehenden Auflageleisten 5 gemeinschaftlich in Schwerkraftrichtung zu lagern.

In dem aus Figur 2 ersichtlichen zweiten Funktionszustand und bei einer damit verbundenen zweiten Relativposition der Elementeinheit 2 und der Flächeneinheit 3 stehen die Auflageleisten 5 der Elementeinheit 2 bearbeitungsproduktseitig nicht gegenüber der Auflageplatte 6 der Flächeneinheit 2 nach oben vor. Folglich bildet die Produktpalette 1 an ihrer Oberseite die ebene Auflagefläche 7 aus, die in der nachstehend beschriebenen Weise zur alleinigen Lagerung der Blechteile 16 in Schwerkraftrichtung genutzt wird.

Der Einsatz der Produktpalette 1 als Teil einer maschinellen Vorrichtung 18 zum Handhaben der Blechteile 16 und des Restgitters 17 ist in den Figuren 4 bis 10 veranschaulicht.

Die Blechteile 16 und das Restgitter 17 sind durch trennende Bearbeitung eines Blechs an einer nicht gezeigten Laserschneidmaschine erzeugt worden. In dem Arbeitsraum der Laserschneidmaschine war das Blech bei der trennenden Bearbeitung auf der Produktpalette 1 gelagert. Nach Beendigung der trennenden Blechbearbeitung wurde die nun mit den Blechteilen 16 und dem Restgitter 17 beladene Produktpalette 1 aus dem Arbeitsraum der Laserschneidmaschine abgeführt und zu einer Separierstation 19 der maschinellen Vorrichtung 18 transferiert.

Die Figuren 4 und 5 zeigen die Separierstation 19 nach der Ankunft der mit den Blechteilen 16 und dem Restgitter 17 beladenen Produktpalette 1.

Bei der trennenden Blechbearbeitung wurden zwischen den Blechteilen 16 und dem Restgitter 17 Nanojoints belassen. Infolgedessen bilden die Blechteile 16 und das Restgitter 17 in den Figuren 4 und 5 einen lösbaren Produktverbund 20.

Bei der Verfahrbewegung in die Separierstation 19 wurde die Produktpalette 1 mittels der Führungsrollen 14 der Elementeinheit 2 an Führungsschienen 21 geführt, die bis an die Separierstation 19 reichen.

Seit der Blechbearbeitung an der Laserschneidmaschine befindet sich die Produktpalette 1 in ihrem ersten Funktionszustand. Die Elementeinheit 2 und die Flächeneinheit 3 nehmen dementsprechend in den Figuren 4 und 5 ihre erste Relativposition ein.

Oberhalb der mit dem Produktverbund 20 beladenen Produktpalette 1 ist in den Figuren 4 und 5 eine Separiereinheit 22 gezeigt.

Die Separiereinheit 22 ist mit einer Haltevorrichtung 23 versehen. Die Haltevorrichtung 23 weist Greifer 24 auf, die sich nach dem Einfahren der mit dem Produktverbund 20 beladenen Produktpalette 1 in die Separierstation 19 noch in ihrer Ausgangsposition befinden, in der sie in der senkrechten Projektion in die Ebene des Produktverbunds 20 außerhalb des Produktverbunds 20 angeordnet sind.

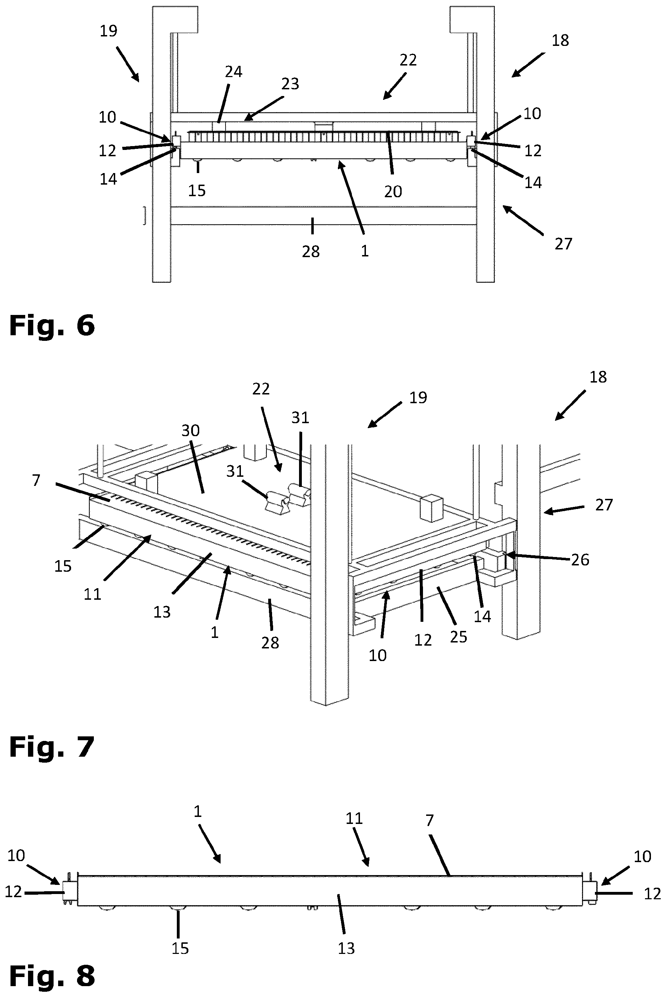

Ausgehend von diesen Verhältnissen werden die Greifer 24 der Haltevorrichtung 23 in eine Position zugestellt, in welcher sie den Produktverbund 20 an dem Restgitter 17 untergreifen (Figur 6).

In den Figuren 4 bis 6 ist die Produktpalette 1 mit den Führungsrollen 14 des Rahmenschenkelpaars 10 der Elementeinheit 2 auf mit den Führungsschienen 21 fluchtenden horizontalen Trägern 25 einer Hubvorrichtung 26 in Schwerkraftrichtung abgestützt. Die horizontalen Träger 25 der Hubvorrichtung 26 sind an einem Traggerüst 27 der Separierstation 19 motorisch angetrieben heb- und senkbar.

In den Figuren 4 bis 6 ist die Flächeneinheit 3 der Produktpalette 1 in Schwerkraftrichtung an der Grundplatte 4 der Elementeinheit 2 gelagert. Dabei sind die Rahmenschenkel 13 der Flächeneinheit 3 mit den daran vorgesehenen Führungsrollen 15 in vertikaler Richtung von einem Auflager 28 beabstandet, das an dem Traggerüst 27 der Separierstation 19 fest montiert ist.

Ausgehend von den Verhältnissen gemäß Figur 6 werden die mit dem Produktverbund 20 beladene Produktpalette 1 und die Separiereinheit 22 gemeinschaftlich mittels der Hubvorrichtung 26 abgesenkt.

Im Laufe der Absenkbewegung setzt die Produktpalette 1 mit den an den Rahmenschenkeln 13 der Flächeneinheit 3 vorgesehenen Führungsrollen 15 auf dem Auflager 28 an dem Traggerüst 27 auf.

Bei fortgesetzter Absenkbewegung der Produktpalette 1 bewegt sich die Elementeinheit 2 der Produktpalette 1 relativ zu der nun in Schwerkraftrichtung ortsfest gelagerten Flächeneinheit 3 nach unten. Infolgedessen ergibt sich die zweite Relativposition der Elementeinheit 2 und der Flächeneinheit 3 und damit verbunden der zweite Funktionszustand der Produktpalette 1, in welchem an der Oberseite der Produktpalette 1 die ebene Auflagefläche 7 ausgebildet ist (Figuren 7, 8).

Die Führungsrollen 14 an den Rahmenschenkeln 12 der Elementeinheit 2 liegen nun mit Abstand oberhalb der horizontalen Träger 25 der Hubvorrichtung 26. Die Elementeinheit 2 ist mit der Grundplatte 4 an hierfür vorgesehenen Anschlägen 29 (Figur 3) an der Flächeneinheit 3 in Schwerkraftrichtung gelagert.

Bei Bedarf könnte die erste Relativposition der Elementeinheit 2 und der Flächeneinheit 3 durch Anheben der Elementeinheit 2 relativ zu der auf dem Auflager 28 abgestützten Flächeneinheit 3 wiederhergestellt werden.

Während der Absenkbewegung der Produktpalette 1 wird der Produktverbund 20 mittels der Haltevorrichtung 23 an die Unterseite einer Vibrationsplatte 30 der Separiereinheit 22 gezogen. An der Oberseite der Vibrationsplatte 30 sind als Schwingungserzeuger Vibratoren 31 angeordnet, die nach der Überführung der Produktpalette 1 in den zweiten Funktionszustand die Vibrationsplatte 30 in vertikale Schwingungen versetzen. Aufgrund der Schwingungen der Vibrationsplatte 30 werden die Blechteile 16 von dem weiterhin mittels der Haltevorrichtung 23 an der Separiereinheit 22 fixierten Restgitter 17 gelöst. Unter Schwerkraftwirkung werden die von dem Restgitter 17 separierten Blechteile 16 schonend und geordnet auf der ebenen Auflagefläche 7 der Produktpalette 1 abgelegt (Figur 9).

Mit dem Auflager 28 an dem Traggerüst 27 der Separierstation 19 fluchten außerhalb der Separierstation 19 angeordnete Führungsschienen 32. Über die Führungsschienen 32 fährt die nun nur noch mit den Blechteilen 16 beladene Produktpalette 1 aus der Separierstation 19 aus. Dabei ist die Produktpalette 1 mit den an den Rahmenschenkeln 13 der Flächeneinheit 3 vorgesehenen Führungsrollen 15 an den Führungsschienen 32 geführt.

Das an der Separiereinheit 22 fixierte Restgitter 17 wird gesondert aus der Separierstation 19 entfernt.

## Patentansprüche

1. Produktpalette zur Ablage eines als Bearbeitungsprodukt einer trennenden Bearbeitung eines plattenartigen Werkstücks, insbesondere eines Blechs, vorliegenden Werkstückteils (16) und eines als weiteres Bearbeitungsprodukt der trennenden Werkstückbearbeitung vorliegenden Restgitters (17), insbesondere zur Ablage eines lösbaren Produktverbunds (20) des Werkstückteils (16) und des Restgitters (17),
• wobei die Produktpalette Auflageelemente (5) aufweist, die bearbeitungsproduktseitig zur gemeinschaftlichen Lagerung des Werkstückteils (16) und des Restgitters (17) in Schwerkraftrichtung ausgebildet sind und
• wobei die Produktpalette in einen ersten Funktionszustand und in einen zweiten Funktionszustand überführbar ist und in dem ersten Funktionszustand der Produktpalette das Werkstückteil (16) und das Restgitter (17) mittels der Auflageelemente (5) der Produktpalette gemeinschaftlich in Schwerkraftrichtung lagerbar sind,
**dadurch gekennzeichnet, dass** die Produktpalette in dem zweiten Funktionszustand an ihrer Oberseite eine ebene Auflagefläche (7) ausbildet, die zur alleinigen Lagerung des Werkstückteils (16) in Schwerkraftrichtung ausgebildet ist.

2. Produktpalette nach Anspruch 1, **dadurch gekennzeichnet,**
• **dass** die Produktpalette in den ersten Funktionszustand und in den zweiten Funktionszustand überführbar ist, indem die Produktpalette eine mit den Auflageelementen (5) versehene Elementeinheit (2) und eine mit der Auflagefläche (7) versehene Flächeneinheit (3) aufweist und die Elementeinheit (2) und die Flächeneinheit (3) der Produktpalette in vertikaler Richtung relativ zueinander zustellbar sind,
• **dass** in dem ersten Funktionszustand der Produktpalette die Elementeinheit (2) und die Flächeneinheit (3) der Produktpalette relativ zueinander in vertikaler Richtung in eine erste Relativposition zugestellt sind, in welcher die Auflageelemente (5) der Elementeinheit (2) bearbeitungsproduktseitig gegenüber der Auflagefläche (7) der Flächeneinheit (3) nach oben vorstehen und
• **dass** in dem zweiten Funktionszustand der Produktpalette die Elementeinheit (2) und die Flächeneinheit (3) der Produktpalette in vertikaler Richtung relativ zueinander in eine zweite Relativposition zugestellt sind, in welcher die Auflageelemente (5) der Elementeinheit (2) bearbeitungsproduktseitig nicht gegenüber der Auflagefläche (7) der Flächeneinheit (3) nach oben vorstehen.

3. Produktpalette nach Anspruch 2, **dadurch gekennzeichnet,**
• **dass** die Elementeinheit (2) der Produktpalette eine Basis (4) aufweist, an welcher die Auflageelemente (5) vorgesehen sind und nach oben vorstehen,
• **dass** die Elementeinheit (2) mit ihrer Basis (4) unterhalb der Auflagefläche (7) der Flächeneinheit (3) der Produktpalette angeordnet ist und
• **dass** die Flächeneinheit (3) an der Auflagefläche (7) mit Durchtrittsöffnungen (8) für die Auflageelemente (5) der Elementeinheit (2) versehen ist.

4. Produktpalette nach Anspruch 2 oder Anspruch 3, **dadurch gekennzeichnet,**
• **dass** die Produktpalette einen rechteckigen Palettenrahmen (9) aufweist mit zwei Rahmenschenkelpaaren (10, 11), die jeweils zwei einander gegenüberliegende Rahmenschenkel (12, 13) umfassen und
• **dass** das eine Rahmenschenkelpaar (10) von der Elementeinheit (2) der Produktpalette und das andere Rahmenschenkelpaar (11) von der Flächeneinheit (3) der Produktpalette ausgebildet ist.

5. Produktpalette nach Anspruch 4, **dadurch gekennzeichnet, dass** die Rahmenschenkel (12, 13) wenigstens eines der Rahmenschenkelpaare (10, 11) mit einer Führungsvorrichtung (14, 15) versehen sind zur Führung der Produktpalette bei Bewegungen in Längsrichtung der mit der Führungsvorrichtung (14, 15) versehenen Rahmenschenkel (12, 13).

6. Produktpalette nach Anspruch 5, **dadurch gekennzeichnet,**
• **dass** jedes des Rahmenschenkelpaare (10, 11) mit einer Führungsvorrichtung (14, 15) versehen ist und
• **dass** bei der ersten Relativposition der Elementeinheit (2) und der Flächeneinheit (3) die Führungsvorrichtung (14, 15) an dem einen Rahmenschenkelpaar (10, 11) und bei der zweiten Relativposition der Elementeinheit (2) und der Flächeneinheit (3) die Führungsvorrichtung (14, 15) an dem anderen Rahmenschenkelpaar (10, 11) zur Führung der Produktpalette verfügbar ist.

7. Maschinelle Vorrichtung zum Handhaben eines als Bearbeitungsprodukt einer trennenden Bearbeitung eines plattenartigen Werkstücks, insbesondere eines Blechs, vorliegenden Werkstückteils (16) und eines als weiteres Bearbeitungsprodukt der trennenden Werkstückbearbeitung vorliegenden Restgitters (17), insbesondere zum Handhaben eines lösbaren Produktverbunds (20) des Werkstückteils (16) und des Restgitters (17), wobei die maschinelle Vorrichtung eine Produktpalette (1) zur Ablage des Werkstückteils (16) und des Restgitters (17) aufweist,
**dadurch gekennzeichnet, dass** als Produktpalette (1) die Produktpalette (1) nach einem der Ansprüche 1 bis 6 vorgesehen ist.

8. Maschinelle Vorrichtung nach Anspruch 7, **dadurch gekennzeichnet, dass** die maschinelle Vorrichtung eine Entladeeinheit aufweist, mittels derer das Werkstückteil (16) und das Restgitter (17) von der in den ersten Funktionszustand überführten Produktpalette (1) entladbar ist.

9. Maschinelle Vorrichtung nach Anspruch 8, **dadurch gekennzeichnet,**
• **dass** die maschinelle Vorrichtung eine Separiereinheit (22) und eine Beladeeinheit aufweist,
• **dass** mittels der Separiereinheit (22) nach dem Entladen der Produktpalette (1) das Werkstückteil (16) von dem Restgitter (17) separierbar ist und
• **dass** mittels der Beladeeinheit die in den zweiten Funktionszustand überführte Produktpalette (1) mit dem von dem Restgitter (17) separierten Werkstückteil (16) beladbar ist.

10. Maschinelle Vorrichtung nach Anspruch 9, **dadurch gekennzeichnet, dass** die Separiereinheit (22) die Entladeeinheit zum Entladen der in dem ersten Funktionszustand befindlichen Produktpalette (1) ausbildet,
• indem die Separiereinheit (22) mit einer Haltevorrichtung (23) versehen ist, mittels derer die an der in dem ersten Funktionszustand befindlichen Produktpalette (1) gelagerten Bearbeitungsprodukte an der Separiereinheit (22) fixierbar sind und
• indem die an der Haltevorrichtung (23) fixierten Bearbeitungsprodukte von den Auflageelementen (5) der in dem ersten Funktionszustand befindlichen Produktpalette (1) entladbar sind.

11. Maschinelle Vorrichtung nach Anspruch 9 oder Anspruch 10, **dadurch gekennzeichnet, dass** die Separiereinheit (22) die Beladeeinheit zum Beladen der in dem zweiten Funktionszustand befindlichen Produktpalette (1) ausbildet,
• indem die Separiereinheit (22) mit dem von dem Restgitter (17) separierten Werkstückteil (16) und die in dem zweiten Funktionszustand befindliche Produktpalette (1) relativ zueinander derart anordenbar sind, dass die in dem zweiten Funktionszustand befindliche Produktpalette (1) unterhalb des Werkstückteils (16) angeordnet ist und
• indem das Werkstückteil (16) von der Separiereinheit (22) zur Ablage auf der in dem zweiten Funktionszustand befindlichen Produktpalette (1) freigebbar ist.

12. Maschinelle Vorrichtung nach Anspruch 10 und Anspruch 11 zum Handhaben eines lösbaren Produktverbunds (20) des Werkstückteils (16) und des Restgitters (17), **dadurch gekennzeichnet,**
• **dass** der Produktverbund (20) an dem Restgitter (17) an der Haltevorrichtung (23) der Separiereinheit (22) fixierbar ist und
• **dass** die Separiereinheit (22) einen Schwingungserzeuger (31) aufweist, mittels dessen vertikale Schwingungen der Haltevorrichtung (23) erzeugbar sind, welche das Lösen des Werkstückteils (16) aus dem Produktverbund (20) bewirken.

13. Maschinelle Vorrichtung nach einem der Ansprüche 7 bis 12 mit einer Produktpalette (1) nach einem der Ansprüche 2 bis 6, **dadurch gekennzeichnet, dass** die maschinelle Vorrichtung eine Hubvorrichtung (26) aufweist, mittels derer die Elementeinheit (2) der Produktpalette (1) und die Flächeneinheit (3) der Produktpalette (1) in vertikaler Richtung relativ zueinander in die erste Relativposition und/oder in die zweite Relativposition zustellbar sind.

14. Maschinelle Vorrichtung nach Anspruch 13, **dadurch gekennzeichnet,**
• **dass** bei der ersten Relativposition der Elementeinheit (2) und der Flächeneinheit (3) die Flächeneinheit (3) in Schwerkraftrichtung an der Elementeinheit (2) gelagert ist und
• **dass** zum Zustellen der Elementeinheit (2) und der Flächeneinheit (3) aus der ersten Relativposition in die zweite Relativposition
- die Hubvorrichtung (26) für die Elementeinheit (2) und ein in Schwerkraftrichtung wirksames Auflager (28) für die Flächeneinheit (3) vorgesehen sind und
- die Elementeinheit (2) mittels der Hubvorrichtung (26) relativ zu der an dem Auflager (28) in Schwerkraftrichtung gelagerten Flächeneinheit (3) absenkbar ist.

15. Maschinelle Vorrichtung nach Anspruch 14, **dadurch gekennzeichnet, dass** an der Flächeneinheit (3) ein bei der zweiten Relativposition der Elementeinheit (2) und der Flächeneinheit (3) in vertikaler Richtung wirksamer Anschlag (29) für die Elementeinheit (2) vorgesehen ist.

16. Maschinelle Vorrichtung nach einem der Ansprüche 13 bis 15, **dadurch gekennzeichnet, dass** zum Zustellen der Elementeinheit (2) und der Flächeneinheit (3) aus der zweiten Relativposition in die erste Relativposition
• die Hubvorrichtung (26) für die Elementeinheit (2) und ein in Schwerkraftrichtung wirksames Auflager (28) für die Flächeneinheit (3) vorgesehen ist und
• die Elementeinheit (2) mittels der Hubvorrichtung (26) relativ zu der an dem Auflager (28) in Schwerkraftrichtung gelagerten Flächeneinheit (3) anhebbar ist.
